# EUROPEAN PATENT SPECIFICATION

(11) **EP 1 860 948 B1**
(45) Date of publication and mention of the grant of the patent: **17.06.2009**
(21) Application number: 06725097.7
(22) Date of filing: 16.03.2006
(51) Int. Cl.: A01N 59/04

(54) **METHOD OF DEPARASITIZING AND PARASITICIDAL POWDER**
VERFAHREN ZUR ENTFERNUNG VON PARASITEN, UND PARASITIZIDES PULVER
PROCEDE DE DEPARASITAGE ET POUDRE ANTIPARASITAIRE

(30) Priority: 17.03.2005 FR 0502661
(43) Date of publication of application: 05.12.2007
(73) Proprietor: Solvay SA, 1050 Brussels (BE)
(72) Inventor: PASCAL, Jean-Philippe, F-54000 Nancy (FR); PALANGIE, Nicolas, F-60880 Le Meux (FR)
(74) Representative: Gilliard, Pierre
(86) International application number: PCT/EP2006/060784
(87) International publication number: WO 2006/097504

(56) References cited:
- WO-A-20/05025317
- FR-A- 2 848 780
- DATABASE CA [Online] CHEMICAL ABSTRACTS SERVICE, COLUMBUS, OHIO, US; DEPASQUALE, DAVID A. ET AL: "Ammonium bicarbonate inhibition of mycotoxigenic fungi and spoilage yeasts" XP002354633 retrieved from STN Database accession no. 1990:529225 & JOURNAL OF FOOD PROTECTION , 53(4), 324-8 CODEN: JFPRDR; ISSN: 0362-028X, 1990,

## Description

The invention relates to a method of deparasitizing. It relates more particularly to a method of deparasitizing by application of a parasiticidal powder to parasites and in their environment. It also relates to a parasiticidal powder.

The term "parasiticidal powder" is intended to mean a powder upon contact with which the parasites (arthropods such as fleas, ticks and other acarids), which have a tendency to develop in particular on livestock animals, cannot survive.

The parasites may be in the egg, larval or adult state. The action of the powder can be direct. It can also be indirect, for example when the powder destroys a substance necessary for the survival of the parasite.

The development of parasites on livestock animals is a worrying and well-known problem. This development can have considerable consequences on the economic productivity of livestock farms. The absence of an effective solution at a reasonable cost sometimes moreover prompts stockbreeders to resort to unauthorized remedies, or to use excessive amounts of them.

It is in particular known practice to combat parasites by means of substances that are neurotoxic and growth inhibitors, such as synthetic pyrethrinoids, organophosphorous compounds or carbamates, for example. These substances have the drawback of also being toxic for the animal on which the parasites develop. When the rearing of the animal is intended for human food consummation, the use of neurotoxic parasiticides is prohibited because these substances contaminate the food chain, as attested to by the European directives on biocides (98/8 EC) and on plant protection (91/414 EEC). It also presents risks for the stockbreeders.

The title WO 01/35744 discloses a silica-based parasiticidal composition. This composition in the form of a gel is free of neurotoxic agents but is expensive. Furthermore, the low proportion, in the composition, of active substance requires the application of large amounts so as to obtain sufficient effectiveness. Its use in large livestock farms is therefore difficult for economic reasons. Finally, this known composition has the drawback of forming, on the surface treated, a gelatinous deposit to which ambient dust has a tendency to adhere, which reduces its effectiveness over time.

The invention aims to provide a method of deparasitizing that is harmless to humans, has long-lasting effectiveness in combating parasites that develop on livestock animals and can be used at a low cost.

Consequently, the invention relates to a method for controlling the development of parasites in the environment of animals, according to which the environment is brought into contact with a powder free of neurotoxic agents, comprising at least 60 % by weight of an alkali metal bicarbonate and 1 % of silica, in which the alkali metal bicarbonate particles have a particle size distribution such that at least 75 % of the particles have a diameter of less than 100µ.

In the method according to the invention, the alkali metal bicarbonate can, for example, be bicarbonate in the strict sense, such as potassium bicarbonate or sodium bicarbonate. In this report, it also covers, however, compound salts such as alkali metal sesquicarbonates (for example, trona) which comprise bicarbonate. Sodium bicarbonate, potassium bicarbonate or trona are especially suitable. Bicarbonates in the strict sense are recommended. Potassium bicarbonate and sodium bicarbonate, more particularly sodium bicarbonate, are preferred. In some situations potassium bicarbonate is however most preferred. The powder comprises at least 60 %, advantageously 70 %, preferably 80 %, even more preferably 85 %, by weight of bicarbonate. In particular, by virtue of its particle size in accordance with the invention, the bicarbonate has a parasiticidal action per se and its presence in the powder does not have the function of a diluent or a silica carrier.

The bicarbonate particles have a particle size distribution such that at least 50 %, advantageously 75 %, preferably 90 %, of the particles have a diameter of less than 100 p, preferably less than 70µ. The means diameter is advantageously less than 50 µ, preferably 40 µ. The diameters are measured according to ASTM standard C -690 - 1992.

The powder comprises at least 1 %, preferably 5 %, of silica. It is recommended that it should not comprise more than 20 %, preferably 15 %. It has been observed that the presence of silica in the powder increases, by synergy, the parasiticidal effects of the alkali metal bicarbonate. Furthermore, since the powder comprises high concentrations of bicarbonate, the presence of silica improves the flow of the powder and therefore promotes homogeneous application thereof. It is recommended that the silica should be in amorphous (and noncrystalline) form so as to be tolerated by the human organism.

It is preferred for the silica to be in the form of very fine particles, having a high specific surface area, for example greater than 200 m²/g, preferably 400 m²/g, measured according to ISO standard 5794-1, annex D. In an advantageous embodiment of the invention, the silica is in the form of particles having a mean diameter of less than 10 µ. The mean diameter is measured according to ASTM standard C -690 - 1992.

In the method according to the invention, the powder is used in the solid state.

It appears that the parasites do not eat the bicarbonate. It has been observed that, when the parasite is in contact with the powder, particles of the bicarbonate adhere to the parasite, which impairs its movements and brings about its death. This hypothesis would explain the importance of the particle size of the bicarbonate, since particles having a diameter similar to the size of the parasite are less of a hindrance to its movements.

The alkali metal bicarbonates and the silica are substances that are harmful to humans and animals. In the case of sodium bicarbonate and potassium bicarbonate, they are even authorized by various organizations (such as the Food and Drug Administration in the United States and the EEC) in human food. In the method according to the invention, the powder requires no other substance active against parasites, such as neurotoxic parasiticides.

According to a preferred variant of the invention, the powder is even free of any other parasiticidal active ingredient.

The bicarbonate-silica mixture must be as homogeneous as possible. It has, however, been observed, under certain circumstances, in particular when the mixing is carried out in ploughshare mixers, which is advantageous, mixing for too long can result in a loss of effectiveness of the subsequent powder. In general, times of greater than 10 minutes are to be avoided. In general, it is also recommended to process the alkali metal bicarbonate-silica mixture in such a way as to fluidize it. This fluidization occurs in a ploughshare mixer when the mixture falls back into the mixer following the rotation of the ploughshare.

The method according to the invention is effective against parasites in numerous animal environments, and also in the human environment. The term "environment" is intended to mean all the surfaces on which the parasites can be led to land, move or develop. This environment includes, for example, the walls and the doorframes/window frames of homes, offices and livestock buildings, the latter comprising cages, nest boxes, litter and nests. By virtue of its synergistic effectiveness, its good applicability to the floors of buildings and its low cost, it has, however, proved to be particularly effective in combating parasites that develop on livestock animals or in their environment.

The bringing into contact can be obtained by any appropriate known means. Spraying is however preferred. The amount of powder to be applied depends on the precise composition of it, on the nature of the parasite and on the environment to be treated. It is generally recommended to apply amounts of powder corresponding to the application of at least 10, preferably 15 g/m² of bicarbonate. The application must be as homogeneous as possible.

Since the powder is harmless to animals, it has the great advantage of being able to be applied to the animal's environment in the livestock building in the presence of the animal.

Moreover, the method according to the invention can be used before or after contamination of the building by the parasites. If the building is already contaminated, the method makes it possible to kill a large amount of parasites. The effect is then curative. In particular, if the powder is brought into contact with the environment by spraying, it has been observed that the method is particularly advantageous by spraying directly onto the parasites. If the building is not yet contaminated and has been cleaned, it is observed that the method according to the invention makes it possible to delay, surprisingly, the development of the parasites when it is again occupied by the animals. The latter use of the method, on a cleaned building, is recommended. The effect can then be described as preventive.

The parasites that develop on livestock animals or in their neighbourhood are extremely varied: fleas, lice, bugs and ticks are in particular encountered. Some are in particular classified in the insect family (fleas, lice, mealworms), others in the acarid family (ticks, sarcoptes).

According to an advantageous variant of the method according to the invention, the parasites are acarids. The method is especially effective against *Dermanyssus gallinae.* These parasites have a tendency to develop abundantly in the environment of laying hens. They are intermittent parasites. They do not always remain in contact with the animal. They are killed when they come into contact with the treated environment of the animal.

The method according to the invention can be used in combating the parasites that develop on any type of livestock animal. By way of example, mention may be made of bovine animals, ovine animals, caprin animals, rabbits, poultry, birds and pigs. The deparasitizing of their environment improves the growth and the development of these animals and increases the productivity of livestock farms.

According to a recommended embodiment of the method according to the invention, the livestock animals are poultry, such as laying hens and broilers. It has been observed that the treatment according to the invention of their environment increases egg production by laying hens and the growth of chickens, by virtue of the elimination of the parasites.

The method is particularly advantageous for the rearing of broilers. In fact, the method according to the invention allows a good treatment of litters, consisting of ground straw and wood shavings. The treatment also does not adversely affect the performances of the litter.

The buildings for rearing animals also suffer from the excessive development of many various moulds and fungi, such as, for example, *Aspergillus,* in *particular fumigatus.* The use of bicarbonate in the parasiticidal method according to the invention makes it possible to also combat their development.

Consequently, the invention also relates to the use of the method according to the invention for its combined parasiticidal and antifungal effects. The combination of a easy application to the floors and other horizontal surfaces of buildings, synergistic parasiticidal effects between the silica and the bicarbonate and, finally, antifungal effects of the latter makes the use according to the invention extremely advantageous in the treatment of buildings and litter for rearing animals.

The invention also relates to a parasiticidal powder in accordance with the powder used in the method according to the invention, and variants thereof, in which the alkali metal bicarbonate is not sodium bicarbonate.

The following examples serve to illustrate the invention.

### Example 1

20 kg of a powder containing 85 % by weight of sodium bicarbonate having a mean particle size of 40 µm and such that 75 % of particles have a diameter of less than 65 µm, and 15 % of Sipernat^{®} 50S amorphous silica manufactured by Degussa, were used. The powder was applied by dusting, by means of a portable dusting device, onto the environment of laying hens on the floor, in a livestock building capable of containing 6000 hens. The amount of powder applied corresponds approximately to 20 g of active material (bicarbonate + silica) per square metre of treated surface. At the time of the treatment, which is described as curative, the building, which was occupied by the hens, showed a very high level of infestation, especially in the hatcheries. In particular, the flat and horizontal surfaces such as hatcheries, nests, gratings, on the underneath of the feeding rails were treated. Two hours after application of the powder, considerable mortality is noted among the red lice. 4 weeks after the treatment, no further infestation of the building with *Dermanyssus gallinae* red lice was detected at the sites thus treated.

### Examples 2 to 4 (in accordance with the invention)

Lesser mealworm *(Alphitobius diaperinus)* adults and larvae of both sexes (INRA strain of the Laboratoire des Insectes des Denrées Stockées Bordeaux [Laboratory of stored produce insects in Bordeaux]) were used. 50 adults and 50 larvae of *Alphitobius diaperinus* were introduced into a litter of fir tree wood shavings containing food so as to obtain a homogeneous layer 8 cm thick (6-7 kg/m²). Litter is an essential part of the environment of livestock animals such as, for example, laying hens on the floor or broilers. A powder containing 85 % by weight of sodium bicarbonate having a mean particle size of 40 µm and such that 75 % of particles have a diameter of less than 65 µm, and 15 % of Sipemat^{®} 50S amorphous silica manufactured by Degussa, was mixed. The powder was applied to the litter by dusting, according to three modes:
■ dusting of the powder at the surface of the litter (Example 2)
■ dusting of the powder as a homogeneous mixture with the litter (Example 3)
■ dusting of the powder under the litter (Example 4).

Four doses of powder were tested: 5, 10, 20 and 30 g/m².

The *Alphitobius diaperinus* mortality was observed over a period of 14 days.

The results are given in the following table:

| | Number of days to obtain 100% mortality of mealworms | | | | | | | |
|---|---|---|---|---|---|---|---|---|
| | Adults | | | | Larvae | | | |
| | **5g/m²** | **10 g/m²** | **20 g/m²** | **30 g/m²** | **5g/m²** | **10 g/m²** | **20 g/m²** | **30 g/m²** |
| MODE OF APPLICATION BY DUSTING **ON** THE LITTER | | | | **14** | | **8** | **7** | **6** |
| MODE OF APPLICATION BY HOMOGENEOUS DUSTING **IN** THE LITTER | | | **14** | **12** | **8** | **5** | **4** | **2** |
| MODE OF APPLICATION BY DUSTING **UNDER** THE LITTER | | | | **14** | | | **5** | **3** |

The results in the table illustrate the effectiveness of the method according to the invention against mealworm.

### Example 5

In this example, tests were carried out on strains of fungi mentioned as pathogens in the rearing of animals such as, for example, poultry or cattle, in order to evaluate the fungicidal effectiveness of the method according to the invention. To this effect, a powder containing 85 % by weight of sodium bicarbonate having a mean particle size of 40 µm and such that 75 % of particles have a diameter of less than 65 µm, and 15 % of Sipemat 50S amorphous silica manufactured by Degussa, was deposited directly onto an agar medium seeded with *Penicillium expansum, Aspergillus candidus, Aspergillus ochraceus, Aspergillus* group *glaucus, Penicillium sp* and *Scopulariopsis.* The areas of inhibition, i.e. the areas where the growth of the fungus was stopped by the action of the powder, are very marked.

## Claims

1. Method for controlling the development of parasites in the environment of animals, according to which the environment is brought into contact with a powder free of neurotoxic agents, comprising at least 60 % by weight of alkali metal bicarbonate and at least 1 % of silica, in which the bicarbonate particles have a particle size distribution such that at least 75 % of the particles have a diameter of less than 100µ.

2. Method according to the preceding claim, in which the alkali metal bicarbonate is sodium bicarbonate or potassium bicarbonate.

3. Method according to one of the preceding claims, in which the powder comprises from 5 to 20 % by weight of silica and from 80 to 95 % of alkali metal bicarbonate.

4. Method according to one of the preceding claims, in which the alkali metal bicarbonate particles have a particle size distribution such that at least 90 % of the particles have a diameter of less than 70 µ.

5. Method according to any one of Claims 1 to 3, in which the silica is in the form of particles having a mean diameter of less than 10 µm.

6. Method according to any one of the preceding claims, in which the powder is free of any other parasiticidal active ingredient.

7. Method according to any one of the preceding claims, in which the animal is a livestock animal.

8. Method according to the preceding claim, in which the environment is the building in which the animal is reared.

9. Method according to any one of the preceding claims, in which the parasites are acarids.

10. Method according to any one of the preceding claims, in which the animals are laying hens.

11. Use of the method according to any one of the preceding claims, in which the alkali metal bicarbonate is sodium bicarbonate, for combatting parasites and fungi.

12. Parasiticidal powder free of neurotoxic agents, comprising at least 60 % by weight of alkali metal bicarbonate, with the exception of sodium bicarbonate, and at least 1 % of silica, in which the bicarbonate particles have a particle size distribution such that at least 75 % of the particles have a diameter of less than 100 µ.

13. Powder according to the preceding claim, in which the alkali metal bicarbonate is potassium bicarbonate.

14. Powder according to either of Claims 12 and 13, in which the powder comprises from 5 to 20 % by weight of silica and from 80 to 95 % of alkali metal bicarbonate.

15. Powder according to one of Claims 12 to 14, in which the bicarbonate particles have a particle size distribution such that at least 90 % of the particles have a diameter of less than 70 µ.

16. Powder according to any one of Claims 12 to 15, in which the silica is in the form of particles having a mean diameter of less than 10 µm.

17. Powder according to any one of Claims 12 to 16, free of any other parasiticidal active ingredient.

## Patentansprüche

1. Verfahren zum Kontrollieren des Auftretens von Parasiten in der Umwelt von Tieren, bei dem die Umwelt in Kontakt mit einem Pulver gebracht wird, das frei von neurotoxischen Substanzen ist und mindestens 60 Gew.-% Alkalimetallbicarbonat und mindestens 1 % Silika umfaßt, wobei die Bicarbonatpartikel eine derartige Teilchengrößenverteilung aufweisen, daß mindestens 75% der Partikel einen Durchmesser von weniger als 100 µm aufweisen.

2. Verfahren nach dem vorhergehenden Anspruch, bei dem das Alkalimetallbicarbonat Natriumbicarbonat oder Kaliumbicarbonat ist.

3. Verfahren nach einem der vorhergehenden Ansprüche, bei dem das Pulver 5 bis 20 Gew.-% Silika und 80 bis 95% Alkalimetallbicarbonat umfaßt.

4. Verfahren nach einem der vorhergehenden Ansprüche, bei dem die Alkalimetallbicarbonatpartikel eine derartige Teilchengrößenverteilung aufweisen, daß mindestens 90% der Partikel einen Durchmesser von weniger als 70 µm aufweisen.

5. Verfahren nach einem der Ansprüche 1 bis 3, bei dem die Silika in Form von Partikeln mit einem mittleren Durchmesser von weniger als 10 µm vorliegt.

6. Verfahren nach einem der vorhergehenden Ansprüche, bei dem das Pulver frei von jeglichem sonstigem parasitizidem Wirkstoff ist.

7. Verfahren nach einem der vorhergehenden Ansprüche, bei dem das Tier ein Nutztier ist.

8. Verfahren nach einem der vorhergehenden Ansprüche, bei dem die Umwelt das Gebäude, in dem das Tier gehalten wird, ist.

9. Verfahren nach einem der vorhergehenden Ansprüche, bei dem die Parasiten Akariden sind.

10. Verfahren nach einem der vorhergehenden Ansprüche, bei dem die Tiere Legehennen sind.

11. Verwendung des Verfahrens nach einem der vorhergehenden Ansprüche, bei dem das Alkalimetallbicarbonat Natriumbicarbonat ist, fiir die Bekämpfung von Parasiten und Pilzen.

12. Parasitizides Pulver, das frei von neurotoxischen Substanzen ist und das mindestens 60 Gew.-% Alkalimetallbicarbonat, mit Ausnahme von Natriumbicarbonat, und mindestens 1 % Silika umfaßt, bei dem die Bicarbonatpartikel eine derartige Teilchengrößenverteilung aufweisen, daß mindestens 75% der Partikel einen Durchmesser von weniger als 100 µm aufweisen.

13. Pulver nach dem vorhergehenden Anspruch, bei dem das Alkalimetallbicarbonat Kaliumbicarbonat ist.

14. Pulver nach einem der Ansprüche 12 und 13, bei dem das Pulver 5 bis 20 Gew.-% Silika und 80 bis 95% Alkalimetallbicarbonat umfaßt.

15. Pulver nach einem der Ansprüche 12 bis 14, bei dem die Bicarbonatpartikel eine derartige Teilchengrößenverteilung aufweisen, daß mindestens 90% der Partikel einen Durchmesser von weniger als 70 µm aufweisen.

16. Pulver nach einem der Ansprüche 12 bis 15, bei dem die Silika in Form von Partikeln mit einem mittleren Durchmesser von weniger als 10 µm vorliegt.

17. Pulver nach einem der Ansprüche 12 bis 16, das frei von jeglichem sonstigem parasitizidem Wirkstoff ist.

## Revendications

1. Procédé pour contrôler le développement de parasites dans l'environnement d'animaux, selon lequel l'environnement est mis en contact avec une poudre exempte de neurotoxiques comprenant au moins 60% en poids de bicarbonate alcalin et au moins 1 % de silice, dans lequel les particules de bicarbonate ont une distribution granulométrique telle qu'au moins 75% des particules ont un diamètre inférieur à 100µm.

2. Procédé selon la revendication précédente dans lequel le bicarbonate alcalin est du bicarbonate de sodium ou de potassium.

3. Procédé selon l'une des revendications précédentes dans lequel la poudre comprend de 5 à 20% en poids de silice et de 80 à 95% de bicarbonate alcalin.

4. Procédé selon l'une des revendications précédentes, dans lequel les particules de bicarbonate alcalin ont une distribution granulométrique telle que au moins 90% des particules ont un diamètre inférieur à 70µm

5. Procédé selon l'une quelconque des revendications 1 à 3 dans lequel la silice est à l'état de particules ayant un diamètre moyen inférieur à 10µm.

6. Procédé selon l'une quelconque des revendications précédentes, dans lequel la poudre est exempte d'autre principe actif parasiticide.

7. Procédé selon l'une quelconque des revendications précédentes dans lequel l'animal est un animal d'élevage.

8. Procédé selon la revendication précédente dans lequel l'environnement est le bâtiment dans lequel l'animal est élevé.

9. Procédé selon l'une quelconque des revendications précédentes dans lequel les parasites sont des acariens.

10. Procédé selon l'une quelconque des revendications précédentes dans lequel les animaux sont des poules pondeuses.

11. Utilisation du procédé selon l'une quelconque des revendications précédente dans laquelle le bicarbonate alcalin est du bicarbonate de sodium pour combattre les parasites et les moisissures.

12. Poudre parasiticide exempte de neurotoxiques comprenant au moins 60% en poids de bicarbonate alcalin à l'exception du bicarbonate de sodium et au moins 1% de silice, dans laquelle les particules de bicarbonate ont une distribution granulométrique telle que au moins 75% des particules ont un diamètre inférieur à 100µm.

13. Poudre selon la revendication précédente dans laquelle le bicarbonate alcalin est du bicarbonate de potassium.

14. Poudre selon l'une des revendications 12 ou 13 dans laquelle la poudre comprend de 5 à 20% en poids de silice et de 80 à 95% de bicarbonate alcalin.

15. Poudre selon l'une des revendications 12 à 14, dans laquelle les particules de bicarbonate ont une distribution granulométrique telle que au moins 90% des particules ont un diamètre inférieur à 70µm

16. Poudre selon l'une quelconque des revendications 12 à 15 dans laquelle la silice est à l'état de particules ayant un diamètre moyen inférieur à 10µm.

17. Poudre selon l'une quelconque des revendications 12 à 16, exempte d'autre principe actif parasiticide.
